# EUROPEAN PATENT SPECIFICATION

(11) **EP 4 100 294 B1**
(45) Date of publication and mention of the grant of the patent: **15.01.2025**
(21) Application number: 21714279.3
(22) Date of filing: 03.02.2021
(51) Int. Cl.: F16F 1/32, F16F 3/02, F16F 7/09, B61F 5/30

(54) **FRICTION DAMPER FOR A BOGIE SUSPENSION SYSTEM**
REIBUNGSDÄMPFER FÜR EIN DREHGESTELLAUFHÄNGUNGSSYSTEM
AMORTISSEUR À FRICTION POUR UN SYSTÈME DE SUSPENSION DE BOGIE

(30) Priority: 07.02.2020 PL 12893620 U
(43) Date of publication of application: 14.12.2022
(73) Proprietor: Wagony Swidnica sp. z o.o., 58-100 Swidnica (PL)
(72) Inventor: PAZDZIERNIAK, Przemyslaw, 58-160 Swiebodzice (PL); DZIEDZINSKI, Maksymilian, 57-100 Strzelin (PL); STUDZlNSKI, Dionizy, 58-100 Swidnica (PL); SZMIDT, Tomasz, 58-100 Swidnica (PL); KAKOWCZYK, Wieslaw, 58-100 Swidnica (PL)
(74) Representative: Bartula-Toch, Marta
(86) International application number: PCT/PL2021/000004
(87) International publication number: WO 2021/158134

(56) References cited:
- EP-A1- 0 048 193
- EP-A1- 1 057 707
- EP-A1- 1 484 228
- CN-Y- 201 165 233
- DE-A1- 2 110 072
- US-A- 3 835 789

## Description

The patent application discloses a friction damper, particularly in a bogie suspension system, principally in four-axle freight wagons on bogies.

Previously known suspensions systems are constructed in a way whereby, on either side of the chassis frame, the suspension zone relies on bases, each of which is supported by a kit of springs on the accompanying fifth-wheel coupling. The fifth wheel, in turn, is placed on the axle box. Each base features a space at the centre that is limited by surfaces that work with the fifth wheel columns. Between the fifth wheel columns and the cooperating base surfaces, on either side of the column, friction wedges are applied, supported on the springs placed on the fifth wheel. Friction wedges are usually triangular, with various surface angles, with inserts placed on the wedge, fifth wheel and base surfaces that work together. Resistance to the glide of the friction wedge against the base and the fifth wheel, which itself provides for movement damping, is achieved owing to friction created between the wedge and the fifth wheel column. Such a composition of technical measures, in some weather conditions, in the case of improper material selection, incorrect shaping of cooperating parts, and insufficient rigidness, particularly lateral, of springs that stabilise the suspension, may result in various forces causing improper wedge function in stroke damping. Such changes are undesired, and may lead to jamming, which consequently causes incorrect placement of the bogie both on the straight track and on the curve. This results in higher rolling resistance and damage to the bogies and rails. Similar solutions are known from the Canadian patent specifications No. CA920430(A) and No. CA969806(A), which refer to rail car suspension systems, wherein the friction wedge insert has a cross-section of a truncated triangle.

Polish patent specification PL207920(B) presents a rail car suspension system, particularly for two-axle freight wagons, formed by bases affixed to the chassis on either side in the bogie zones, supported on springs placed on the accompanying fifth wheel couplings. The fifth wheel is placed on the axle box of the bogie. Each base features a space at the centre that is limited by surfaces that work with the fifth wheel columns. Friction wedges are applied on either side between the fifth wheel columns and the cooperating bases. The friction wedges have rollers installed, preferably one or two. In a friction wedge with two rollers, the plane formed by the rollers is at 35° angle from the horizontal axis, whereas the vertical surface features an insert made of low-friction material, lower than 0.2, outer surface of which has the shape of a fragment of a horizontal cylinder. A single-roller friction wedge has the vertical surface at a slant of 3° toward the wedge decline, and is fitted with an insert made of low-friction material, lower than 0.2, with a bumper placed on the lower side of the wedge, on the slanting surface next to the roller. Springs are characterised with a greater lateral rigidity. The change to spring rigidity has been achieved by the application of a plate dividing the spring kits into parts, preferably two. In order to improve rigidity, the plates dividing the neighbouring springs that support the base and the wedge are interconnected, and the corresponding division plates on one side of the wagon are connected with the division plates on the other side.

A bogie guide is known from the Polish patent specification PL173525(B), fitted with coil springs as main springs, characterised with the fact that the guidance and drive forces are transmitted from the wheelsets onto the bogie exclusively via the paired coil springs. Coil springs form spring sets that are preliminarily tensioned by the base plates on either side and a pin permanently affixed to one of the two base plates.

Polish patent application No. 340 485 (A) refers to the rail car chassis. The chassis features torsion-resistant bogie frame, a crossbar, and longitudinal girders. Axle bearing guides are placed directly in the bottom belt of the girder, whereas axle bearing guides feature both slidable clamping pads with clearance, preferably two, as well as spring cups connected by links, which additionally rely on axle bearings via the springs. Clamping pads are pressed on both sides to the axle bearings by the spring cups.

German patent application DE 2110072(A1) discloses an axle guide on a bogie for rail vehicles, in particularly for freight wagons, in which coil springs are arranged between the axle bearing housing and the bogie frame on both sides of the wheel axle, one end in which is supposed on a movable intermediate part, trough which between the bogie frame and the axle bearing housing friction dampers which are arranged and are effective in the vertical and, if necessary, the horizontal transverse direction are acted upon by a force acting in the longitudinal direction and dependent on the loading of the helical spring in the vertical direction. Between the bogie frame and the axle bearing housing there is at least one force acting in the longitudinal direction of the bogie additional spring is arranged, which is acted upon by the intermediate part with a load dependent bias.

The invention is a friction damper, suitable for a bogie suspension system, according to claim 1.

The **key feature** of the solution according to the invention consists in the fact that the guide cylinder features a closing sleeve with an inner flange. The spring element placed inside the guide cylinder has is adjacent slidable friction element in the shape of a cylinder with a flange, the diameter of which corresponds to the inner diameter of the guide cylinder. The flange is located inside the guide cylinder, while the remaining part of the friction element protrudes outside through the closing sleeve. When the spring element is in its most stretched position, the flange of the friction element rests on the flange of the closing sleeve.

The closing sleeve can be connected to the guide cylinder either permanently or in a dismantlable manner.

The spring element can be formed by a disc spring.

The spring element can be formed by a cylinder spring.

The spring element can be formed by an elastomer.

The spring element can be formed by a rubber.

The friction element can have a cylindrical groove that marks the wear of the bottom friction surface.

The merit of this solution according to the invention lies in the application of an additional friction damper that introduces an additional spring element along the bogie, and allows radial positioning of the wheelsets at the curve. The damper structure allows smooth regulation of the preliminary tension force of the spring element, facilitates the assembly, and reduces the costs of friction damper maintenance.

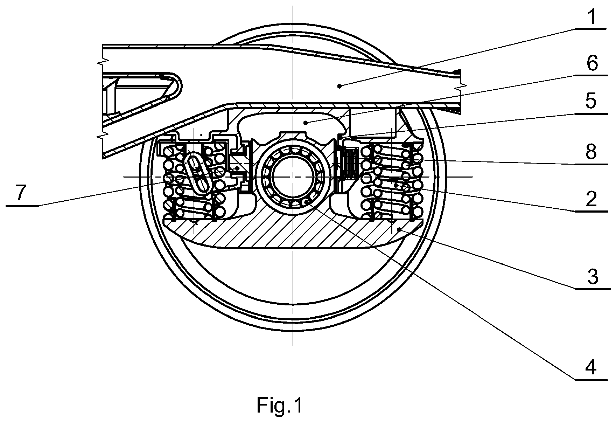

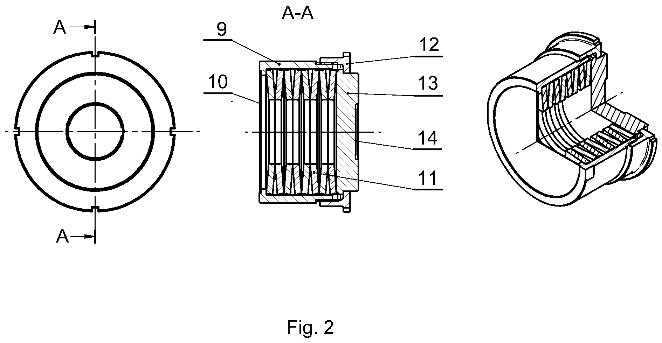

The solution according to the invention has been presented in the drawing, where Fig. 1 presents the friction damper in the bogie suspension system, while Fig. 2 presents the friction damper structure.

The friction damper operates in the bogie suspension system that includes frame articulated on the wagon chassis, supported on either side by spring kits 2 placed on the fifth wheel couplings 3. The fifth wheel 3 is placed on the axle box 4. Between the guides 5 with the cooperating fifth wheel coupling 3 and frame 1, there is free space 6, whereas friction dampers are placed in the guides 5. In one guide 5, there is a mushroom-shaped friction insert 7, while in the other, between the fifth wheel 3 and the guide, there is the cylindrical friction damper 8.

The damper 8 features a guide cylinder 9 that is closed from one side with the bottom 10, while inside the guide cylinder 9, there is a disc spring 11 with an adjacent friction element 13 that slides inside the guide cylinder 9 along its axis. The friction element 13 is in the shape of a flanged cylinder hidden inside the guide cylinder 9, whereas the remaining part protrudes more or less outside the guide cylinder 9 via the threaded sleeve 12 screwed onto the outer thread present on the guide cylinder 9 from the side opposite to the bottom 10. The friction element 13 presses onto the disc spring 11, while when it expands, the element protrudes outside until it rests its flange on the inner flange of the sleeve 12. Furthermore, the friction element 13 has a cylindrical groove 14 to mark the wear of the friction surface.

In another variant of the invention, the sleeve 12 is press-fitted at the end of the guide cylinder 9, or it is affixed to the cylinder wall in a dismantlable manner, e.g., by rivets or pegs. Instead of the disc spring, a cylinder spring can be used as the spring element, or any other tensile material, such as elastomer or rubber.

## Claims

1. A **friction damper,** suitable for **a bogie suspension system,** suitable to be placed in a guide (5) of the bogie suspension system, containing a guide cylinder (9) suitable to be mounted between a fifth wheel coupling (3) of the bogie suspension system and said guide (5), which guide cylinder (9) is closed from one side through a bottom (10), and has a spring element (11) inside, said guide cylinder (9) comprising a slidable friction element (12), **characterised in that** the guide cylinder (9) is closed from one side opposite from said bottom (10) by a closing sleeve (12) with an inner flange, whereas the spring element (11) placed inside the guide cylinder (9) is adjacent to said slidable friction element (13) in the shape of a cylinder fitted with a flange, the diameter of which corresponds to the inner diameter of the guide cylinder (9), whereas the flange is located inside the guide cylinder (9), while the remaining part of a friction element (13) protrudes outside via the sleeve (12); wherein, when the spring element (11) is most stretched, the flange of the friction element (13) rests on the flange of the sleeve (12).

2. **The friction damper** according to claim 1 **characterised in that** the closing sleeve (12) is dismantlable from the guide cylinder (9).

3. **The friction damper** according to claim 1 **characterised in that** the closing sleeve (12) is permanently attached to the guide cylinder (9).

4. **The friction damper** according to claim 1 **characterised in that** the closing sleeve (12) is dismantlable from the guide cylinder surface (9).

5. **The friction damper** according to claim 1 **characterised in that** the spring element (11) is formed by a disc spring.

6. **The friction damper** according to claim 1 **characterised in that** the spring element (11) is formed by a cylinder spring.

7. **The friction damper** according to claim 1 **characterised in that** the spring element (11) is formed by elastomer.

8. **The friction damper** according to claim 1 **characterised in that** the spring element (11) is formed by rubber.

9. **The friction damper** according to claim 1 **characterised in that** the friction element (13) comprises a cylindrical groove (14) to mark the wear of its friction surface.

## Patentansprüche

1. **Reibungsdämpfer, der für ein Drehgestellaufhängungssystem geeignet ist und** in einer Führung (5) des Drehgestellaufhängungssystems angeordnet ist, die einen Führungszylinder (9) enthält, der geeignet ist, zwischen einer Sattelkupplung (3) des Drehgestellaufhängungssystems und der Führung (5) montiert zu werden, wobei der Führungszylinder (9) von einer Seite durch einen Boden (10) geschlossen ist und ein Federelement (11) innerhalb des Führungszylinders (9) aufweist, das ein verschiebbares Reibungselement (12) umfasst, **dadurch gekennzeichnet, dass** der Führungszylinder (9) von einer dem Boden (10) gegenüberliegenden Seite durch eine Verschlusshülse (12) mit einem inneren Flansch verschlossen ist, während das im Inneren des Führungszylinders (9) angeordnete Federelement (11) an das verschiebbare Reibungselement (13) in Form eines mit einem Flansch versehenen Zylinders angrenzt, dessen Durchmesser dem Innendurchmesser des Führungszylinders (9) entspricht, wobei der Flansch im Inneren des Führungszylinders (9) angeordnet ist, während der verbleibende Teil eines Reibungselements (13) über die Hülse (12) nach außen ragt; wobei der Flansch des Reibungselements (13) auf dem Flansch der Hülse (12) aufliegt, wenn das Federelement (11) am stärksten gedehnt ist.

2. **Reibungsdämpfer** nach Anspruch 1, **dadurch gekennzeichnet, dass** die Verschlusshülse (12) vom Führungszylinder (9) abnehmbar ist.

3. **Reibungsdämpfer** nach Anspruch 1, **dadurch gekennzeichnet, dass** die Verschlusshülse (12) fest mit dem Führungszylinder (9) verbunden ist.

4. **Reibungsdämpfer** nach Anspruch 1, **dadurch gekennzeichnet, dass** die Verschlusshülse (12) von der Führungszylinderfläche (9) abnehmbar ist.

5. **Reibungsdämpfer** nach Anspruch 1, **dadurch gekennzeichnet, dass** das Federelement (11) durch eine Tellerfeder gebildet ist.

6. **Reibungsdämpfer** nach Anspruch 1, **dadurch gekennzeichnet, dass** das Federelement (11) durch eine Zylinderfeder gebildet ist.

7. **Reibungsdämpfer** nach Anspruch 1, **dadurch gekennzeichnet, dass** das Federelement (11) aus einem Elastomer gebildet ist.

8. **Reibungsdämpfer** nach Anspruch 1, **dadurch gekennzeichnet, dass** das Federelement (11) aus Gummi gebildet ist.

9. **Reibungsdämpfer** nach Anspruch 1, **dadurch gekennzeichnet, dass** das Reibungselement (13) eine zylindrische Rille (14) zur Markierung des Verschleißes seiner Reibungsfläche aufweist.

## Revendications

1. **Amortisseur à friction, adapté à un système de suspension de bogie,** placé dans un guide (5) du système de suspension de bogie contenant un cylindre de guidage (9) adapté pour être monté entre une sellette d'attelage (3) du système de suspension de bogie et ledit guide (5), lequel cylindre de guidage (9) est fermé d'un côté par un fond (10), et possède un élément à ressort (11) à l'intérieur dudit cylindre de guidage (9) comprenant un élément de friction coulissant (12), **caractérisé en ce que** le cylindre de guidage (9) est fermé d'un côté opposé audit fond (10) par un manchon de fermeture (12) avec une bride intérieure, tandis que l'élément à ressort (11) placé à l'intérieur du cylindre de guidage (9) est adjacent audit élément de friction coulissant (13) sous la forme d'un cylindre muni d'une bride dont le diamètre correspond au diamètre intérieur du cylindre de guidage (9), tandis que la bride est située à l'intérieur du cylindre de guidage (9), tandis que la partie restante d'un élément de friction (13) fait saillie à l'extérieur par l'intermédiaire du manchon (12) ; dans lequel, lorsque l'élément ressort (11) est le plus étiré, la bride de l'élément de friction (13) repose sur la bride du manchon (12).

2. **L'amortisseur de friction** selon la revendication 1 **caractérisé par le fait que** le manchon de fermeture (12) est démontable du cylindre de guidage (9).

3. **L'amortisseur à friction** selon la revendication 1, **caractérisé par le fait que** la douille de fermeture (12) est fixée de façon permanente au cylindre de guidage (9).

4. **L'amortisseur à friction** selon la revendication 1, **caractérisé par le fait que** la douille de fermeture (12) est démontable de la surface du cylindre de guidage (9).

5. **L'amortisseur de friction** selon la revendication 1, **caractérisé par le fait que** l'élément de ressort (11) est formé par un ressort à disque.

6. **L'amortisseur de friction** selon la revendication 1 **caractérisé par le fait que** l'élément de ressort (11) est formé par un ressort cylindrique.

7. **L'amortisseur de friction** selon la revendication 1 **caractérisé par le fait que** l'élément ressort (11) est formé d'élastomère.

8. **L'amortisseur de friction** selon la revendication 1 **caractérisé par le fait que** l'élément de ressort (11) est formé de caoutchouc.

9. **L'amortisseur à friction** selon la revendication 1 **caractérisé par le fait que** l'élément de friction (13) comprend une rainure cylindrique (14) pour marquer l'usure de sa surface de friction.
